# EUROPEAN PATENT APPLICATION

(11) **EP 2 587 439 A1**
(43) Date of publication of application: **01.05.2013**
(21) Application number: 12182321.5
(22) Date of filing: 30.08.2012
(51) Int. Cl.: G06Q 30/06

(54) **Terminal apparatus and system with the terminal apparatus**

(30) Priority: 26.10.2011 JP 2011235342
(71) Applicant: Toshiba Lighting & Technology Corporation, Yokosuka-shi Kanagawa 237-8510 (JP)
(72) Inventor: Shikakura, Tomoaki, Kanagawa, 237-8510 (JP); Hiraoka, Toshiyuki, Kanagawa, 237-8510 (JP)
(74) Representative: Willquist, Sofia Ellinor

(57) **Abstract**

According to one embodiment, a portable terminal apparatus, which is a sales supporting apparatus, is used by a person in charge of commodity sales when the person in charge of commodity sales have a business negotiation with a customer concerning a luminaire or a lighting system including a semiconductor light-emitting light source. The portable terminal apparatus includes a touch panel, which is a display section, and a control section configured to control the touch panel. The control section enables input of a desired specification concerning at least one of a geometric extent of a beam of rays, a color temperature, and a color rendering index and causes the touch panel to display a commodity list of commodities that meet the input desired specification.

## Description

### FIELD

Embodiments described herein relate generally to a terminal apparatus and a system with the same.

### BACKGROUND

Currently, for example, in a business negotiation with a customer, a person in charge of commodity sales sometimes uses a so-called electronic catalog. In this case, the person in charge of commodity sales can immediately determine, while listening to a desire of the customer, a commodity close to the desire of the customer. Therefore, the usage of the electronic catalog is considered to be useful for realizing a smooth commercial transaction.

However, if the so-called electronic catalog is used, a commodity selection range is limited to existing commodities described in the electronic catalog. Therefore, the usage of the electronic catalog is sometimes insufficient for satisfying the desire of the customer.

In particular, in a luminaire or a lighting system including a semiconductor light-emitting light source, unlike the existing light sources in the past, a geometric extent of a beam of rays, a color temperature, a color rendering index, and the like of the semiconductor light-emitting light source are easily adjusted according to adjustment and combinations of the semiconductor light-emitting light source in use, a type of an element, a type of a wavelength converting member, a composition, and the like. Nevertheless, the luminaire or the lighting system including the semiconductor light-emitting light source has to be selected from only already-commercialized commodity forms. Therefore, it is difficult to appeal differences from luminaires in the past. It is likely that the promotion of the luminaire or the lighting system including the semiconductor light-emitting light source is not attained even if the luminaire or the lighting system is excellent in power saving.

In general, according to one embodiment, there is provided a terminal apparatus and a system with the same that makes it possible to quickly deal with a desire of a customer and attain the promotion of a luminaire or a lighting system including a semiconductor light-emitting light source excellent in power saving.

### DESCRIPTION OF THE DRAWINGS

FIG. 1 is a diagram of a terminal apparatus according to an embodiment, a server apparatus, and a printer apparatus;
FIG. 2 is a block diagram of the a terminal apparatus;
FIG. 3 is a diagram of an example of a screen displayed on the terminal apparatus;
FIG. 4 is a diagram of an example of a screen displayed on the terminal apparatus;
FIG. 5 is a diagram of an example of a screen displayed on the terminal apparatus;
FIG. 6 is a diagram of an example of a screen displayed on the terminal apparatus; and
FIG. 7 is a diagram of an example of a screen displayed on the terminal apparatus.

### DETAILED DESCRIPTION

A terminal apparatus according to an embodiment is used for a luminaire or a lighting system including a semiconductor light-emitting light source. The terminal apparatus includes a display section and a control section configured to enable input of a desired specification concerning at least one of a geometric extent of a beam of rays, a color temperature, and a color rendering index and cause the display section to display a commodity list of commodities that meet the input desired specification.

With this configuration, the control section enables input of a desired specification concerning at least one of a geometric extent of a beam of rays, a color temperature, and a color rendering index and causes the display section to display a commodity list of commodities that meet the input desired specification. Therefore, it is possible to quickly deal with a desire of a customer and attain the promotion of a luminaire or a lighting system including a semiconductor light-emitting light source excellent in power saving.

An embodiment is explained below with reference to the accompanying drawings.

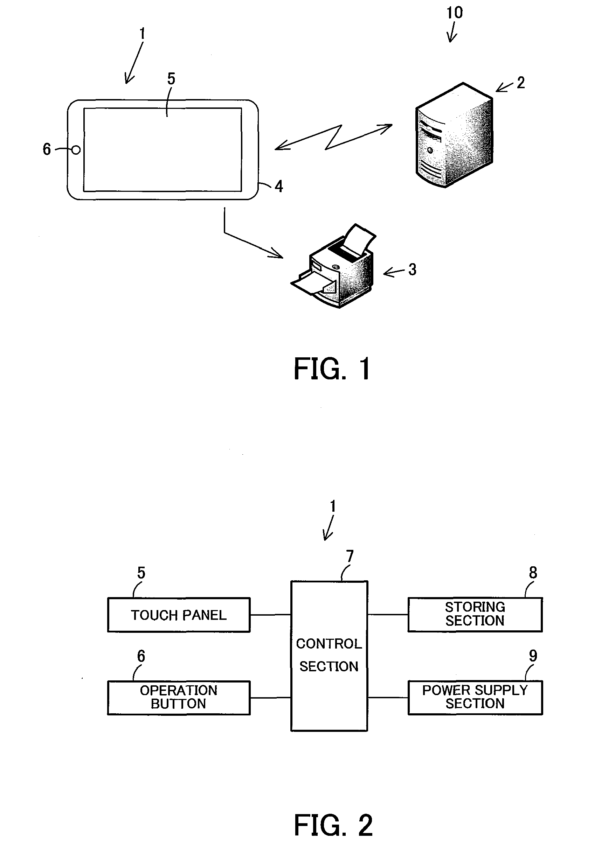

In FIGS. 1 and 2, reference numeral 1 denotes a portable terminal apparatus, which is a portable sales supporting apparatus. The portable terminal apparatus 1 is used in having a business negotiation with a customer concerning a commodity (a lighting commodity), which is a luminaire or a lighting system including a semiconductor light-emitting light source including a semiconductor light-emitting element such as an LED element or an organic EL element. In other words, the portable terminal apparatus 1 is used by a person in charge of commodity sales (a salesperson) in a business negotiation with a customer such as a builder.

The commodity (the luminaire or the lighting system) is, for example, a commodity manufactured by a build-to-order manufacturing system for stocking, in a state of components, at least a part of plural component members included in the luminaire or the lighting system and manufacturing the luminaire or the lighting system according to an order of a customer.

As shown in FIG. 1, the portable terminal apparatus 1 can be connected to a server apparatus 2, which is an information delivering apparatus set in a factory, a head office, or the like, via a communication network (communication means) such as the Internet. During a state in which the portable terminal apparatus 1 and the server apparatus 2 are connected to each other via the communication network, transmission and reception of information is performed between the portable terminal apparatus 1 and the server apparatus 2. The portable terminal apparatus 1 can be used even during a non-connected state (offline) of the portable terminal apparatus 1 and the server apparatus 2. The portable terminal apparatus 1 can transmit information to a printer apparatus 3.

The portable terminal apparatus 1 includes an apparatus main body 4 having a substantially rectangular tabular shape. On the front surface side of the apparatus main body 4, a touch panel 5, which is a display section also functioning as an operation section (an input section) touched by a finger tip, a touch pen, or the like, is provided substantially the entire front surface side of the apparatus main body 4. Further, an operation button 6 such as a power ON-OFF button is provided in the apparatus main body 4.

As shown in FIG. 2, the portable terminal apparatus 1 includes a control section 7 that controls the touch panel 5 and the like. The touch panel 5, the operation button 6, a storing section 8, a power supply section 9, and the like are electrically connected to the control section 7.

In the storing section 8, various kinds of information such as commodity information concerning commodities and customer information concerning customers are stored. The control section 7 timely acquires latest information from the server apparatus 2 and causes the storing section 8 to store the latest information to be capable of dealing with new commodities updated at any time. The portable terminal apparatus 1 and the server apparatus 2 configure a sales supporting system 10.

Screens displayed when the person in charge of commodity sales makes a business negotiation concerning lighting commodities with a customer using the portable terminal apparatus 1 are explained with reference to the drawings.

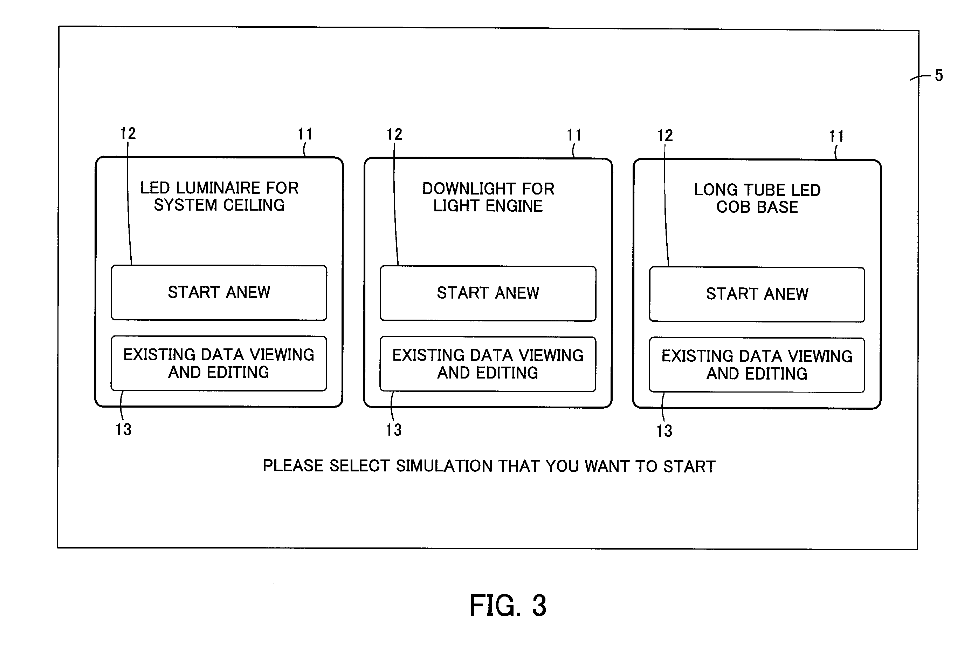

FIG. 3 is a diagram of an example of a model selection screen displayed on the touch panel 5 of the portable terminal apparatus 1.

The model selection screen shown in FIG. 3 includes plural model display sections 11 in which models of commodities such as luminaires or lighting systems (e.g., "LED luminaire for system ceiling", "downlight for light engine", and "long tube LED COB base") are displayed.

The model display sections 11 include start buttons 12 for selecting a model desired by a customer and starting anew detailed setting related to the model and viewing and editing buttons 13 for viewing and editing existing information registered in the past.

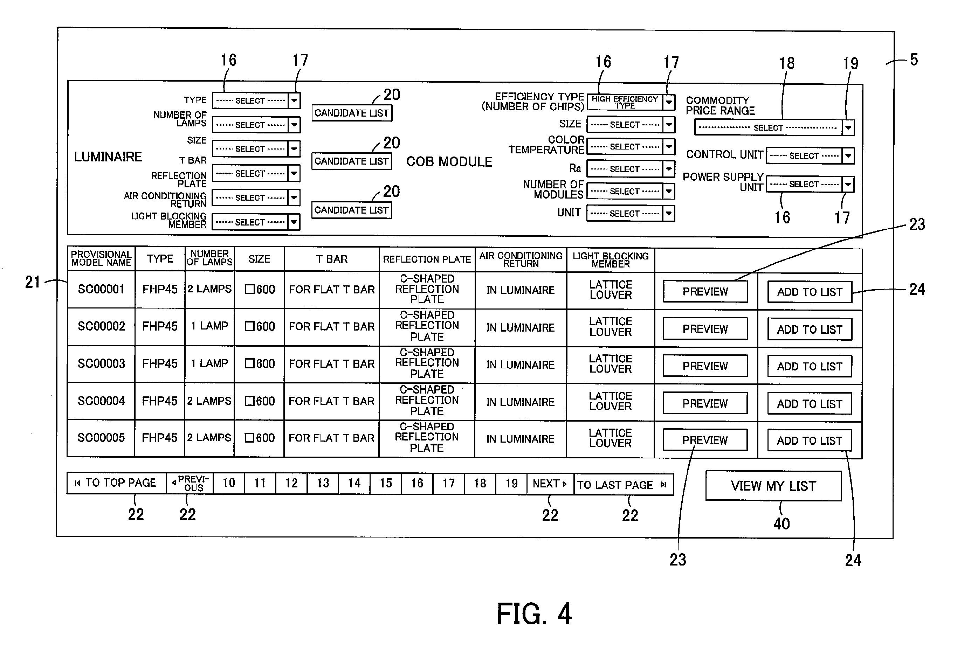

For example, if the person in charge of commodity sales touches the start button 12 of the model display section 11 of the "LED luminaire for system ceiling", as shown in FIG. 4, concerning commodities of the "LED luminaire for system ceiling", a customizing screen (a customer desired specification input screen) for inputting customer desired specifications, which are specifications concerning a geometric extent of a beam of rays, a color temperature, a color rendering index, and the like desired by the customer, is displayed on the touch panel 5.

The customizing screen shown in FIG. 4 includes plural, for example, fifteen desired-specification display sections 16 in which input customer desired specifications are displayed and pull-down menu display buttons 17, which are display buttons provided to correspond to the desired-specification display sections 16.

If the person in charge of commodity sales touches the pull-down menu display button 17, a pull-down menu of specifications registered in advance is displayed on the touch panel 5. The person in charge of commodity sales touches and selects one item from the displayed pull-down menu to input a customer desired specification. In other words, it is possible to select and input, only by touching the touch panel 5, a customer desired specification out of plural specifications registered in advance.

Customer desired specifications that can be input on the customizing screen shown in FIG. 4 include specifications concerning "type", "number of lamps", "size", "T bar", "reflection plate", "air conditioning return", and "light blocking member" related to component members of a luminaire main body and specifications concerning "efficiency type (number of chips)", "size", "color temperature", "Ra", "number of modules", "unit", "control unit", and "power supply unit" related to a COB module, which is a semiconductor light-emitting light source.

The specification concerning the "efficiency type (number of chips)" is a specification concerning a geometric extent of a beam of rays of a semiconductor light-emitting light source of a commodity, i.e., a specification concerning light emission efficiency (a geometric extent of a beam of rays per unit power consumption). The specification can be arbitrarily input by selection from, for example, "high efficiency type" and "low efficiency type" registered in advance. The number of chips is the number of LED elements in light emission groups on a module substrate. As the specification concerning the geometric extent of a beam of rays, for example, a numerical value, a range, or the like of light emission efficiency may be arbitrarily directly input or a numerical value, a range, or the like of the geometric extend of a beam of rays (luminaire light flux) may be arbitrarily directly input.

The specification concerning the "color temperature" is a specification concerning a color temperature of the semiconductor light-emitting light source of the commodity. The specification can be arbitrarily input by selection out of, for example, "2700 K", "3000 K", "3500 K", "4000 K", "4500 K", "5000 K", "5500 K", "6000 K", "6500 K", "6700 K", and "7000 K" registered in advance. As the specification concerning the color temperature, for example, a numerical value, a range, or the like of the color temperature may be arbitrarily directly input.

The specification concerning the "Ra" is a specification concerning an average color rendering index, which is a color rendering index (color rendering properties), of the semiconductor light-emitting light source of the commodity. The specification can be arbitrarily input by selection out of, for example, "70", "75", "80", "85", "90", "95", and "100" registered in advance. As the specification concerning the color rendering index, for example, a numerical value, a range, or the like of the average color rendering index (Ra) may be arbitrarily directly input. Such various kinds of efficiency, color temperature, and Ra can be realized by combining, as appropriate, types of LED elements (a blue light-emitting element, an ultraviolet light-emitting element, an RGB light-emitting element, etc.), types of sealing members (wavelength converting members including various fluorescent materials), and mounting forms of LED elements (setting of parallel connection and series connection, a combination of connections, etc.).

The specification concerning the "T bar" is a specification concerning a lighting supporting member (a luminaire supporting member or a lighting system supporting member), which is a member determined by setting environment conditions on the customer side, i.e., for example, a specification concerning the shape of a ceiling support bar supported by supporting bolts suspended from a ceiling structure of a room in which the customer intends to set a luminaire or a lighting system, which is a commodity. The specification can be arbitrarily input by selection out of, for example, "for flat T bar" and "for grooves T bar" registered in advance. As the specification concerning the lighting support member on the customer side, for example, characters or the like representing the shape of the ceiling support bar may be arbitrarily directly input.

A member-selection operation section is configured by the pull-down menu display button 17 for inputting a customer desired specification related to a component member of a luminaire main body and items of a pull-down menu displayed by the operation of the button 17. A light-source-setting operation section is configured by the pull-down menu display button 17 for inputting a customer desired specification related to a COB module and items of a pull-down menu displayed by the operation of the button 17.

The customizing screen shown in FIG. 4 includes a desired-price-range display section 18 in which an input customer desired price range is displayed and a pull-down menu display button 19, which is a display button provided to correspond to the desired-price-range display section 19.

If the person in charge of commodity sales touches the pull-down menu display button 19, a pull-down menu of price ranges registered in advance is displayed on the touch panel 5. The person in charge of commodity sales touches and selects one item out of the displayed pull-down menu to thereby input a customer desired price range. In other words, it is possible to select and input, only by touching the touch panel 5, a customer desired price range out of plural price ranges registered in advance. For example, as the customer desired price range, a commodity price range such as "**** yen to **** yen" is input.

The customizing screen shown in FIG. 4 includes "candidate list" buttons 20, which are plural buttons for causing the touch panel 5 to display a list of specifications registered in advance.

For example, if the "candidate list" button 20 concerning the "T bar" is touched, a list of specifications of ceiling support bars registered in advance is displayed on the touch panel 5 together with drawings, dimensions, and the like indicating the shapes of the ceiling support bars. Therefore, the customer can check, looking at the displayed drawings, the dimensions, and the like, the shape of a ceiling support bar of a ceiling structure of a room in which the customer intends to set a commodity.

Further, the customizing screen shown in FIG. 4 includes a commodity-list display section 21 in which a commodity list of commodities that meet customer desired specifications and a customer desired price range input by the touching is displayed.

For example, in a state before the customer desired specifications and the customer desired price range are input, a commodity list of realizable all commodities registered in advance is displayed. The commodity list of the realizable all commodities includes commodities already commercialized in the past and commodities not commercialized yet.

If indication that a customer desired specification desired by the customer, for example, a customer desired specification of the "efficiency type (number of chips)" related to the geometric extent of a ray of beams is the "high efficiency type" is input, narrowing of commodities is executed and a commodity list indicating only commodities of the "high efficiency type" is displayed in the commodity-list display section 21.

Subsequently, if customer desired specifications of the "size", the "color temperature", the "Ra", and the like are input, narrowing of commodities is executed every time each of the customer desired specifications is input. As a result, the number of commodities in the commodity list displayed in the commodity-list display section 21 decreases every time the customer desired specification is input. If commodities are narrowed according to commodity prices, a customer desired price range is input.

As explained above, the control section 7 of the portable terminal apparatus 1 enables input of the customer desired specifications and the customer desired price range on the touch panel 5. If the customer desired specifications and the customer desired price range are input by the operation of the touch panel 5, the control section 7 causes, on the basis of the input customer desired specifications and customer desired price range, the touch panel 5 to display a commodity list (a search result display space) of realizable commodities that meet the customer desired specifications and the customer desired price range.

If commodities that meet input and set customer desired conditions, i.e., the customer desired specifications and the customer desired price range are not present among all the realizable commodities registered in advance, for example, indication "corresponding commodity is absent" is displayed on the touch panel 5. Even if commodities that meet the customer desired specifications and the customer desired price range are present, a predetermined number of commodity lists of commodities closest to the customer desired specifications and the customer desired price range can also be displayed. In this case, if it possible to set which of the customer desired specifications and the customer desired price range is given priority, commodities that have higher realizability and meet a customer desire are collectively displayed. This is extremely effective in having a business negotiation. If the number of commodities that meet the customer desired conditions is equal to or larger than the predetermined number, for example, six, a page changing button 22 only has to be used.

Further, the commodity-list display section 21 includes a "preview" button 23, which is a check button for checking commodity details of commodities of a commodity list, and a "add to list" button 24, which is a registration button for registering commodities in a my list, which is a customer purchase desired commodity list. The "preview" button 23 and the "add to list" button 24 are provided for each of the commodities of the commodity list.

In short, as shown in FIG. 4, the commodity list displayed in the commodity-list display section 21 includes a provisional model name, which is a model name of a commodity, customer desired specifications related to a luminaire main body among input plural customer desired specifications, the "preview" button 23 for checking commodity details (including, for example, at least a commodity image) of a commodity corresponding to the provisional model name and the customer desired specifications, and the "add to list" button 24 for registering the corresponding commodity in the my list. As the commodity list, all of the input plural customer desired specifications may be displayed rather than a part thereof.

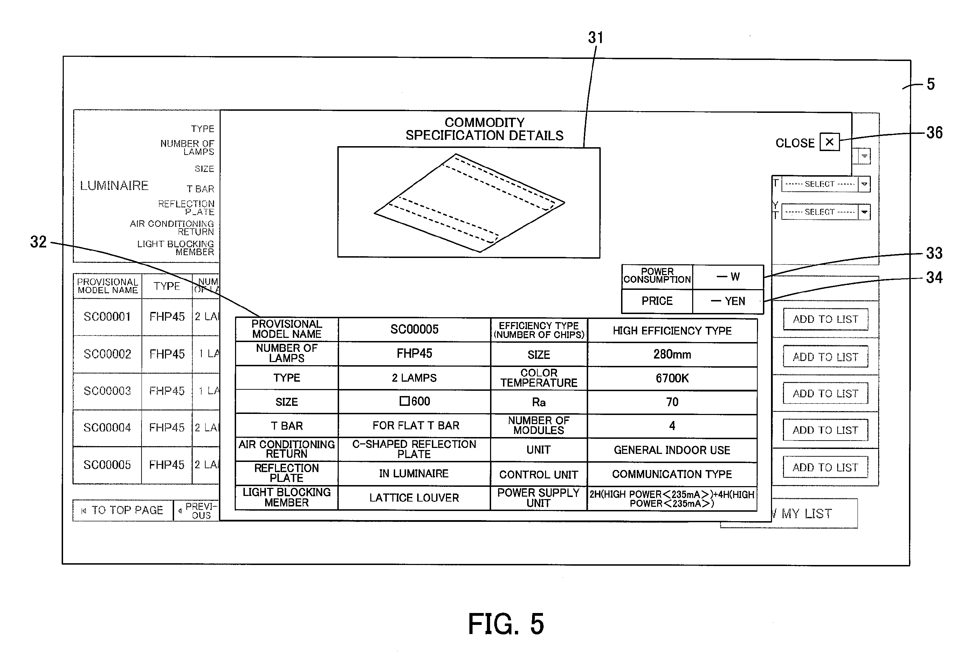

For example, if the person in charge of commodity sales touches the "preview" button 23, as shown in FIG. 5, a specification detail screen (a popup screen) for displaying details of one selected commodity selected out of the commodities of the commodity list is opened and displayed on the customizing screen.

The specification detail screen shown in FIG. 5 includes an image display section 31 in which an image of the selected commodity selected out of the commodities of the commodity list is displayed, a specification display section 32 in which specifications (input all customer desired specifications) of the selected commodity are displayed, a power-consumption display section 33 in which the power consumption of the selected commodity is displayed, and a price display section 34 in which a price of the selected commodity (a reference price of one piece of the commodity) is displayed.

As explained above, if one commodity is selected out of the commodities of the commodity list that meet the customer desired conditions, the control section 7 of the portable terminal apparatus 1 causes the touch panel 5 to display an image of the selected one commodity together with the customer desired specifications, the power consumption, and the price. The image of the selected commodity displayed in the image display section 31 is, for example, computer graphics (CG), a photograph, or the like.

The specification detail screen shown in FIG. 5 includes a screen closing button 36. If the screen closing button 36 is touched, the specification detail screen closes and returns to the customizing screen.

Further, as shown in FIG. 4, the customizing screen includes a "view my list" button 40, which is a display button for causing the touch panel 5 to display a my list, which is a purchase desired commodity list of commodities that the customer desires to purchase.

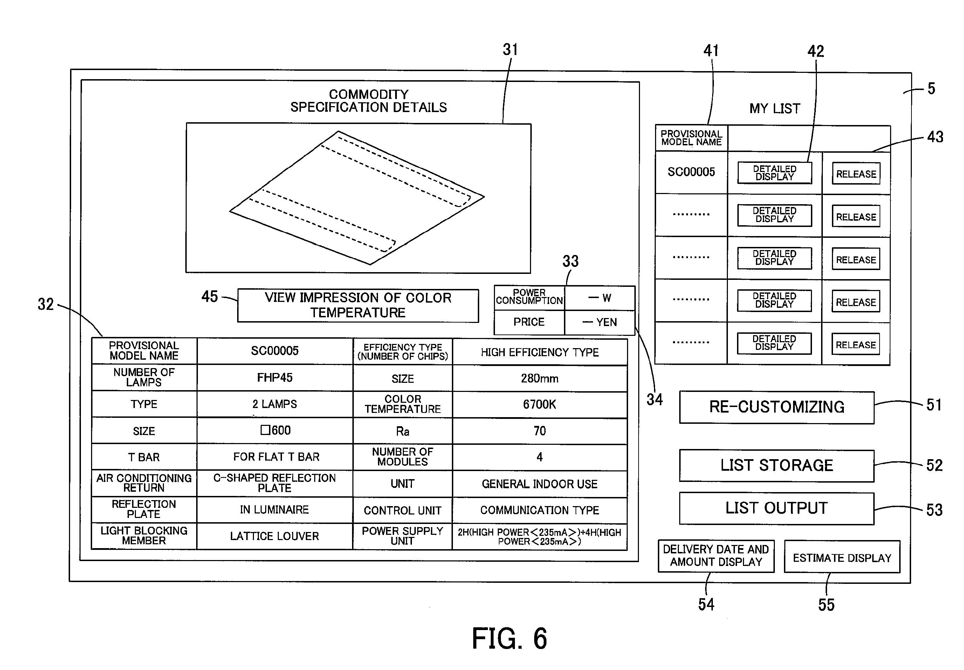

For example, if the person in charge of commodity purchase touches the "view my list" button 40, as shown in FIG. 6, a my list screen for displaying the my list is displayed on the touch panel 5.

The my list screen shown in FIG. 6 includes a my-list display section 41 in which provisional model names (provisional models) of purchase desired commodities, which are selected commodities selected out of the commodities of the commodity list, are displayed. The my-list display section 41 includes a "detail display" button 42, which is a check button for checking commodity details of the my list, and a "release" button 43, which is a deleting button for deleting a commodity from the my list. The "detail display" button 42 and the "release" button 43 are provided for each of the commodities of the my list.

For example, if the person in charge of commodity sales touches the "detail display" button 42, a specification detail screen for displaying details of one selected commodity selected out of the purchase desired commodities of the my list is opened and displayed on the my list screen.

Like the specification detail screen shown in FIG. 5, the specification detail screen shown in FIG. 6 includes the image display section 31, the specification display section 32, the power-consumption display section 33, and the price display section 34. The specification detail screen shown in FIG. 6 includes a "view impression of color temperature" button 45, which is a check button for checking the impression of the color temperature of a purchase desired commodity, which is a selected commodity. The "view impression of color temperature" button 45 is displayed relatively large in a position below the image display section 31.

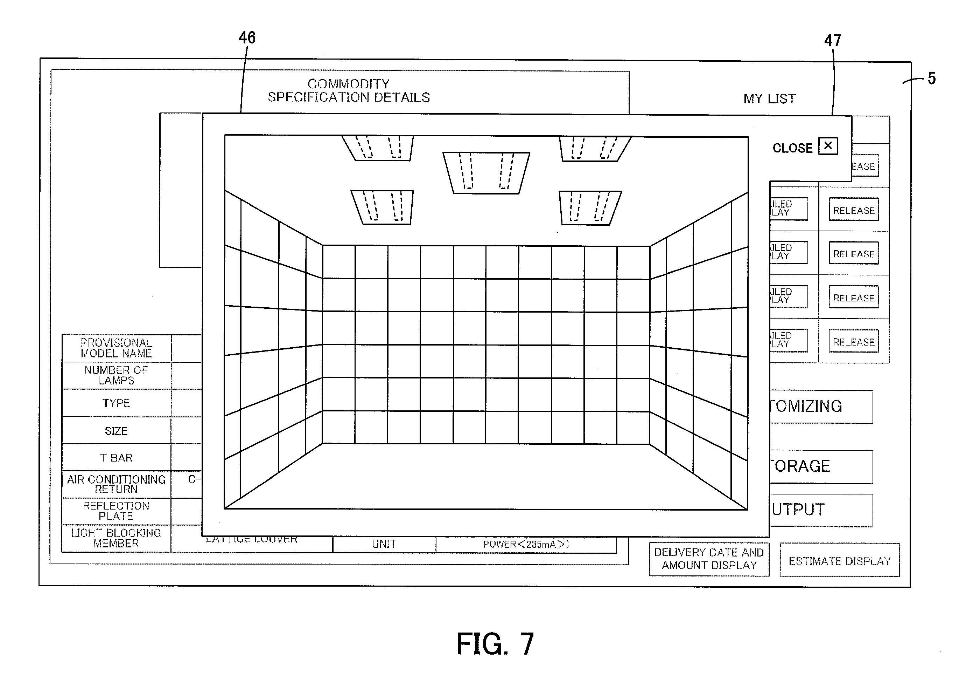

If the "view impression of color temperature" button 45 is touched, as shown in FIG. 7, a color temperature screen (a pop-up screen) for displaying a simulation image for checking the color temperature of purchase desired commodities is opened and displayed on the my list screen.

The color temperature screen shown in FIG. 7 includes an image display section 46 in which a simulation image for checking the color temperature of purchase desired commodities selected out of the commodities of the my list is displayed. The purchase desired commodities of the my list are originally the selected commodities selected out of the commodities of the commodity list shown in FIG. 4.

The simulation image for checking the color temperature displayed in the image display section 46 shows, for example, a color temperature image in a standard setting example. The simulation image includes images of a predetermined number of (e.g., five) selected commodities and an image of a room in which the selected commodities are set. The simulation image is, for example, computer graphics (CG), a photograph, or the like.

Further, the color temperature screen shown in FIG. 7 includes a screen closing button 47. If the screen closing button 47 is touched, the color temperature screen closes and returns to the my list screen.

As shown in FIG. 6, the my list screen includes a "re-customizing" button 51, a "list storage" button 52, and a "list output" button 53.

If the "re-customizing" button 51 is touched, the my list screen closes and returns to the customizing screen. It is possible to input customer desired specifications again. The my list screen can return to the model selection screen shown in FIG. 3. In this case, it is also possible to change commodity of the LED luminaire for system ceiling to a commodity of the downlight for light engine or a commodity of the long tube LED COB base.

If the "list storage" button 52 is touched, after a new storage in another name or overwrite storage is selected, a my list is registered and stored. If the "list output" button 53 is touched, for example, the my list is output from the printer apparatus 3.

As shown in FIG. 6, the my list screen includes, for example, a "delivery date and amount display" button 54 and an "estimate display" button 55.

If the "delivery date and amount display" button 54, which is a display button, is touched, the control section 7 acquires, on the basis of transmission and reception of information between the control section 7 and the server apparatus 2, both of delivery date information and amount information (estimated amount information) of the purchase desired commodities of the my list and causes the touch panel 5 to display the acquired delivery date information and amount information.

Therefore, the person in charge of commodity sales can immediately inform the customer of a delivery date and an amount (an estimated amount) of the purchase desired commodities in the business negotiation. The server apparatus 2 arranged in a remote location retrieves, on the basis of transmitted information from the portable terminal apparatus 1, order states, manufacturing states, stock states, and the like in members of the purchase desired commodities to thereby calculate delivery date information and amount information and transmits a result of the calculation to the portable terminal apparatus 1.

If the "estimate display" button 55, which is a display button, is touched, the control section 7 creates, on the basis of the delivery date information, the amount information, and the like from the server apparatus 2, an estimate of the purchase desired commodities of the my list and causes the touch panel 5 to display the estimate. Therefore, the person in charge of commodity sales can immediately present an estimate indicating a delivery date, an amount, and the like to the customer in the business negotiation. The person in charge of commodity sales can output the estimate from the printer apparatus 3 as well by touching a print button (not shown).

The control section 7 of the portable terminal apparatus 1 causes, in response to a catalog viewing request, the touch panel 5 to display an electronic catalog in which standard products are described. Therefore, the person in charge of commodity sales can use the electronic catalog as well. In this case, for example, the control section 7 may acquire stock information of the purchase desired commodities in the electronic catalog on the basis of transmission and reception of information between the control section 7 and the server apparatus 2 and cause the touch panel 5 to display the acquired stock information.

The portable terminal apparatus 1 may transmit, on the basis of, for example, the commodity information stored in the my list or the commodity information displayed in the form shown in FIG. 6, the commodity information to the server apparatus 2, a personal computer apparatus (PC), or the like such that the efficiency (the geometric extent of a beam of rays), the color temperature, and the Ra of an actual luminaire can be realized. Consequently, commodities can be reproduced in a state closer to an actual use state than viewing of the simulation image shown in FIG. 7, smooth commodity selection can be facilitated in the business negotiation. The actual luminaire in this case is a luminaire set in a virtual experience space (e.g., a showroom) for demonstration. The actual luminaire is configured to be capable of reproducing, as appropriate, the efficiency (the geometric extent of a beam of rays), the color temperature, and the Ra of the purchase desired commodities in the my list or any one of the efficiency (the geometric extent of a beam of rays), the color temperature, and the Ra through communication with the server apparatus 2, the personal computer apparatus (PC), or the like or the portable terminal apparatus 1.

With the portable terminal apparatus 1 explained above, the control section 7 enables input of the customer desired specifications and the customer desired price range on the screen of the touch panel 5. The control section 7 causes, on the basis of the customer desired specifications and the customer desired price range input concerning the geometric extent of a beam of rays, the color temperature, and the color rendering index of the semiconductor light-emitting light source and a lighting supporting member and the like on the customer side, the touch panel 5 to display a commodity list of realizable commodities that meet the customer desired specifications and the customer desired price range. Therefore, it is possible to quickly deal with a desire of the customer and realize the promotion of a luminaire or a lighting system including a semiconductor light-emitting light source excellent in long life and power saving.

The control section 7 causes the touch panel 5 to display the image of the selected commodity selected out of the commodities of the commodity list together with the customer desired specifications, the power consumption, and the price. Therefore, it is possible to easily check the image, the specifications, the power consumption, and the price of the selected commodity and more quickly deal with the desire of the customer.

Further, the control section 7 causes the touch panel 5 to display the simulation image for checking the color temperature of the selected commodities selected out of the commodities of the commodity list. Therefore, the selected commodities in actual use can be easily imaged. It is possible to realize, in cooperation with the customer, conformity with the desire of the customer. Therefore, it is possible to appropriately and quickly deal with the desire of the customer.

The simulation image for checking the color temperature includes the image of the selected commodities and the image of the room in which the selected commodities are set. Therefore, the selected commodities in actual use can be more easily imaged.

Further, the control section 7 can acquire, based on transmission and reception of information between the control section 7 and the server apparatus 2, at least one of the delivery date information and the amount information of the selected commodities selected out of the commodities of the commodity list, i.e., for example, both of the delivery date information and the amount information. Therefore, the person in charge of commodity sales can inform the customer of the delivery date and the amount of the purchase desired commodities in the business negotiation. It is possible to more quickly deal with the desire of the customer.

The commodity list of the commodities that meet the customer desired specifications includes the provisional model name, the input customer desired specifications, the "preview" button 23, and the "add to list" button 24. Therefore, it is possible to easily check images and the like of commodities that the customer desires to purchase. Further, it is possible to easily register the commodities in the my list.

The sales supporting apparatus is not limited to the portable terminal apparatus 1, which is an information terminal apparatus including the touch panel 4, which is an input display section. The sales supporting apparatus may be, for example, a personal computer apparatus including a monitor, a keyboard, a mouse, and a personal computer main body.

The portable terminal apparatus 1 may include a detachable storage medium such as an SD card and input information concerning the purchase desired commodities of the my list to the server apparatus 2 using the storage medium.

Further, the customer desired specifications may be, for example, a specification concerning at least any one of the geometric extent of a beam of rays, the color temperature, and the color rendering index. However, the customer desired specifications desirably are specifications concerning at least the geometric extent of a beam of rays, the color temperature, and the color rendering index. Specifically, for example, if at least a specification concerning the geometric extent of a beam of rays, a specification concerning the color temperature, and a specification concerning the color rendering index are input, a commodity list of commodities that meet all the three customer desired specifications is desirably displayed.

The customer desired specifications may include at least a specification concerning a member determined by setting environment conditions on the customer side in addition to the specifications concerning the geometric extent of a beam of rays, the color temperature, and the color rendering index.

Further, the control section 7 is not limited to a control section that displays the image of the selected commodity together with the customer desired specifications, the power consumption, and the price. For example, the control section 7 may be configured to not display at least any one of the power consumption and the price of the selected commodity.

For example, the specification detail screen shown in FIG. 5 may include the "view impression of color temperature" button 45 to allow the customer to check the color temperature of the selected commodities by touching the "view impression of color temperature" button 45.

Further, for example, the specification detail screens shown in FIGS. 5 and 6 may include the image display section 46 in which a simulation image for checking the color temperature of the selected commodities is displayed.

For example, the customizing screen shown in FIG. 4 may include a specification input completion button. If the specification input completion button is touched, the commodity list of the commodities that meet the customer desired specifications may be displayed.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A terminal apparatus (1) used for a luminaire or a lighting system including a semiconductor light-emitting light source, the terminal apparatus (1) comprising:
a display section (5); and
a control section (7) configured to enable input of a desired specification concerning at least one of a geometric extent of a beam of rays, a color temperature, and a color rendering index and cause the display section to display a commodity list of commodities that meet the input desired specification.

2. The apparatus (1) according to claim 1, wherein the control section (7) causes the display section (5) to display, together with the desired specification, an image of a selected commodity selected out of the commodities of the commodity list.

3. The apparatus (1) according to claim 2, wherein the control section (7) causes the display section (5) to display, together with the image of the selected commodity, at least one of power consumption and a price of the selected commodity.

4. The apparatus (1) according to any one of claims 1 to 3, wherein the control section (7) causes the display section (5) to display a simulation image for checking color temperature of a selected commodity selected out of the commodities of the commodity list.

5. The apparatus (1) according to claim 4, wherein the simulation image for checking the color temperature of the selected commodity includes an image of the selected commodity and an image of a room in which the selected commodity is set.

6. The apparatus (1) according to any one of claims 1 to 5, wherein the control section (7) can acquire, on the basis of transmission and reception of information between the control section (7) and a server apparatus (2), at least one of delivery date information and amount information of a selected commodity selected out of the commodities of the commodity list.

7. The apparatus (1) according to any one of claims 1 to 6, wherein the desired specification includes, in addition to desired specifications concerning the geometric extent of a beam of rays, the color temperature, and the color rendering index, at least a desired specification concerning a member determined by a setting environment condition.

8. The apparatus (1) according to any one of claims 1 to 7, wherein the commodity list includes a model name, a desired specification, a check button (23) for checking commodity details, and a registration button (24) for registering a commodity in a purchase desired commodity list.

9. A system (10) comprising:
the terminal apparatus (1) according to claim 1; and
a server apparatus (2) that can be connected to the terminal apparatus (1), wherein
the control section (7) of the terminal apparatus (1) can acquire, on the basis of transmission and reception of information between the control section (7) and the server apparatus (2), at least one of delivery date information and amount information of a selected commodity selected out of the commodities of the commodity list.

10. The system (10) according to claim 9, wherein the control section (7) of the terminal apparatus (1) causes the display section (5) to display, together with the desired specification, an image of a selected commodity selected out of the commodities of the commodity list.

11. The system (10) according to claim 10, wherein the control section (7) of the terminal apparatus (1) causes the display section (5) to display, together with the image of the selected commodity, at least one of power consumption and a price of the selected commodity.

12. The system (10) according to any one of claims 9 to 11, wherein the control section (7) of the terminal apparatus (1) causes the display section (5) to display a simulation image for checking color temperature of a selected commodity selected out of the commodities of the commodity list.

13. The system (10) according to claim 12, wherein the simulation image for checking the color temperature of the selected commodity includes an image of the selected commodity and an image of a room in which the selected commodity is set.

14. The system (10) according to any one of claims 9 to 13, wherein the desired specification includes, in addition to desired specifications concerning the geometric extent of a beam of rays, the color temperature, and the color rendering index, at least a desired specification concerning a member determined by a setting environment condition.

15. The system (10) according to any one of claims 9 to 14, wherein the commodity list includes a model name, a desired specification, a check button (23) for checking commodity details, and a registration button (24) for registering a commodity in a purchase desired commodity list.
